# EUROPÄISCHE PATENTANMELDUNG

(11) **EP 1 935 705 A2**
(43) Veröffentlichungstag der Anmeldung: **25.06.2008**
(21) Anmeldenummer: 07466027.5
(22) Anmeldetag: 20.12.2007
(51) Int. Cl.: B60N 2/015

(54) **Podest für einen ausgebauten Kraftfahrzeugsitz**

(30) Priorität: 22.12.2006 CZ 20060825
(71) Anmelder: Skoda Auto a.s., 293 60 Mlada Boleslav (CZ)
(72) Erfinder: Lubas, Jaroslav, 468 27 Nova Ves nad Nisou (CZ); Minarik, Roman, 450 01 Liberec (CZ)

(57) **Zusammenfassung**

Das Podest (1) unter dem Sitz (5) des Personenkraftwagens setzt sich aus einem ersten Kreuzteil (2) und einem zweiten Kreuzteil (3) zusammen, die mit einem gemeinsamen Gelenk (4) miteinander verbunden sind und so eine kinematische Kreuzkonstruktion bilden. Das obere Teil (6) des ersten Kreuzteils (2) des Podests (1) beinhaltet mindestens ein erstes Befestigungselement (8) und das zweite Oberteil (7) des zweiten Kreuzteils (3) des Podests (1) beinhaltet mindestens ein zweites Befestigungselement (9). Das erste Befestigungselement (8) ist angefertigt zur Einpassung in den hinteren Schlosseinlauf (13) des Sitzes (5) und das zweite Befestigungselement (9) ist angefertigt zur Einpassung in den vorderen Schlosseinlauf (14) des Sitzes (5). Im Innenbereich des Podests (1) befindet sich ein Sack (10) welcher zum ersten oberen Teil (6) des ersten Kreuzteils (2) und zum zweiten oberen Teil (7) des zweiten Kreuzteils (3) mittels wenigstens eines Befestigungsbands (11) befestigt ist.

## Beschreibung

### Bisheriger Stand der Technik

Gegenwärtig werden im Bereich der PKW verschiedene Konstruktionen der Sitzbefestigung verwendet, die einen Ausbau dieser Sitze aus den Fahrzeugen für die Erlangung eines bessren Komforts der Reisenden oder die Sicherstellung einer größeren Ladefläche im Fahrzeug sicher stellen. Diese herausgenommenen Sitze werden dann weiter zu keinem weiteren Nutzungszweck verwendet und meistens werden diese in verschiedene Lagerbereiche abgelegt, Garage, Keller u.ä. Die Konstruktion, die eine Entspannung und Herausnahme des Sitzes aus dem Automobil sicher stellt ist z.B. im Dokument CZ 2005-394 beschrieben. Ein so aus dem Fahrzeug herausgenommener Sitz kann nicht direkt auf den Boden oder die Erde gestellt werden, ansonsten könnte es zu einer Beschädigung der Feststellelemente des Sitzes zur Karosserie im unteren Sitzbereich kommen. Es könnte zu einer Verbiegung oder zum Abbruch dieser Befestigungselemente kommen.

Gegenwärtig sind verschiedene Camping-, Angler oder Freizeittische bekannt, die über eine gekreuzte, kinematische Konstruktion verfügen, die für verschiedene, nicht nur Freizeitzwecke Verwendung finden. Es ist jedoch keine Möglichkeit der Einspannung des Automobilsitzes zum oberen Teil dieser kinematischen Tischkonstruktion bekannt.

### Das Wesentliche der Erfindung

Die oben angeführten Unzulänglichkeiten werden bis zu einem bestimmten Maß durch ein Podest unter den Sitz des Personenkraftwagens, bestehend aus einem ersten Kreuzteil und einem zweiten Kreuzteil, beseitigt. Diese Teile sind mittels eines Gelenks mit einander verbunden und bilden so eine gekreuzte, kinematische Konstruktion laut der Erfindung, deren Wesen darin besteht, dass der erste obere Teil des ersten Kreuzteils des Podests wenigstens ein erstes Befestigungselement und der zweite obere Teil des Kreuzteils des Podests wenigstens ein zweites Befestigungselement beinhaltet. Das erste bzw. zweite Befestigungselement wurde zur Anbringung in die hintere bzw. vordere Schlossaufnahme des Sitzes eingerichtet. Im Innenbereich des Podests befindet sich ein Sack, welcher zum ersten oberen Kreuzteil und zum zweiten oberen Kreuzteil mittels Bändern, die mit einem Klettverschluss oder gegebenenfalls genietete Druckknöpfe oder Häkchen versehen sind, befestigt ist. Vorteilhaft ist eine Anfertigung des Sacks aus imprägniertem Material.

### Abbildungsübersicht in den Zeichnungen

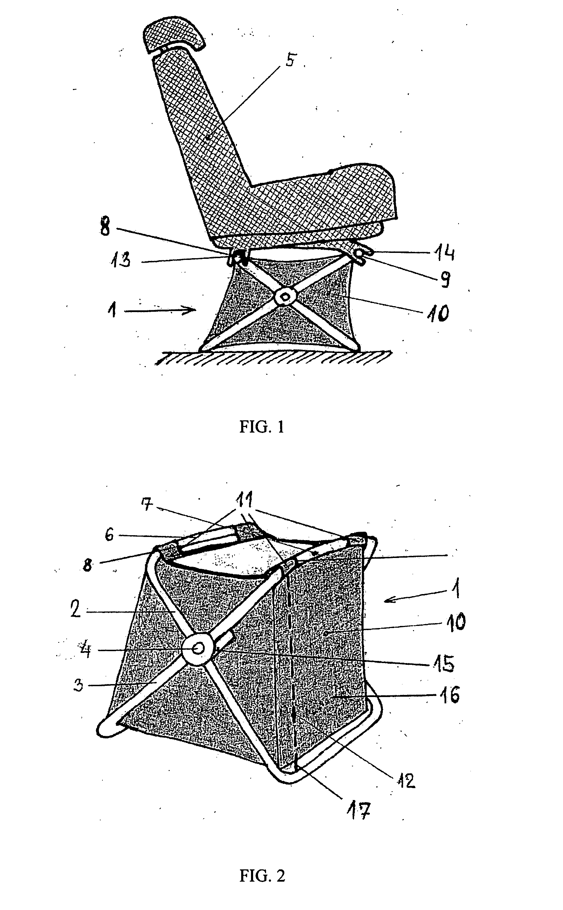

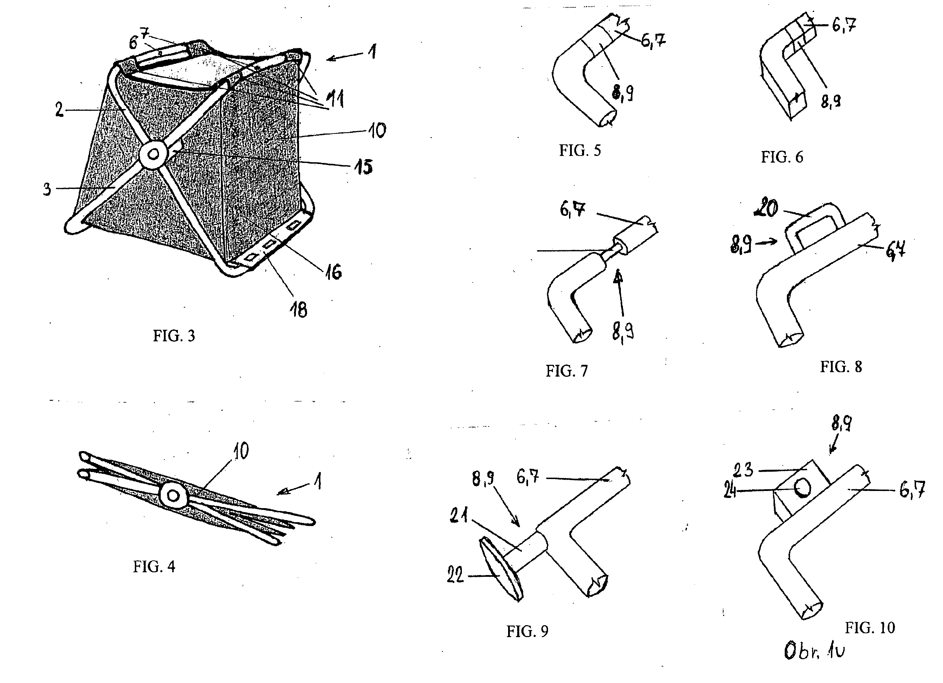

In der Abbildung Nr. 1 ist die Ansicht des Sitzes des Kraftwagens, befestigt auf einem Podest, in der Abbildung 2 und 3 besteht die Ansicht des Podests mit dem Sack in aufgeschlossener Position, die Abb. 4 zeigt das Podest mit Sack in zusammengelegter Position und die Abbildungen 5 bis 10 zeigen verschiedene Ausführungen des oberen Teils der Kreuzteile des Podests.

### Beispiele der Erfindungsdurchführung

Das Podest 1 unter den Sitz 5 des Personenkraftwagens laut de Abbildung 1 und 2 setzt sich aus dem ersten Kreuzteil 2 und des zweiten Kreuzteils 3 zusammen, die miteinander mittels des Gelenks 4 an der Stelle des Schnittpunkts beider Teile befestigt sind und somit eine gekreuzte, kinematische Konstruktion bilden so, dass diese eine maximale Stabilität des Ganze Systems, d.h. Podest - Sitz - Person, sicherstellen._ An der Stelle des Schnittpunkts des ersten Kreuzteils 2 und des zweiten Kreuzteils 3 besteht ein Feststellglied 15, welches beide Teile bei einer maximalen Öffnung sichert. Das erste Kreuzteil 2 des Podests 1 beinhaltet den ersten oberen Teil 6, an dem ein oder mehrere Befestigungselemente 8 angebracht sind. Das zweite Kreuzteil 3 des Podests 1 beinhaltet das zweite obere Teil 7, an dem ein oder mehrere zweite Befestigungselemente 9 angebracht sind. Das erste Befestigungselement 8 wird so gebildet dass dessen genaue und einfache Einbringung in den hinteren Schlossanlauf 13, angebracht am Unterteil des Sitzes 5, gewährleistet ist. Das zweite Befestigungselement 9 wird so ausgeführt, dass dessen genaue und einfache Einbringung in den hinteren Schlossanlauf 14, angebracht am Unterteil des Sitzes 5, gewährleistet ist.

Der Mittelteil der beiden oberen Teile 7 und 8 beider Kreuzteile 2 und 3 des Podests 1 sind so ausgeführt, dass diese als Haltegriffe zum Transport der Podeste dienen.

Im Innenbereich des Podests 1, welcher durch den Umfangsteil durch die Kreuzkonstruktion des ersten Kreuzteils 2 und des zweiten Kreuzteils 3 definiert ist, hat in aufgeklappten Zustand einen Sack 10, welcher im oberen Teil 6 des ersten Kreuzteils 2 und dem zweiten oberen Teil 7 des zweiten Kreuzteils 3 mittels einem oder mehrerer Befestigungsbänder 11 angebracht ist. Das Befestigungsband 11 kann als Klettverschluss oder als mit genieteten Druckknöpfen, Häkchen oder ähnlicher Sicherungselemente ausgeführt werden. Der Sack 10 wurde wasserdicht und abnehmbar entworfen. Der Grund dafür ist eine einfache Möglichkeit der Reinigung.

Der Sack 10, laut der Abbildung 2, beinhaltet auf der Seitenwand 16 ein Feststellband 12, welches im oberen Bereich des Sacks 10 und im unteren Bereich des Sacks 10 an diesen angebracht ist. Das Feststellband 12 kann an beiden Seitenwänden des Sacks 10 befestigt werden. Der untere Teil des Bands 12 ist mit einem Befestigungselement 17 zur Befestigung des Bands 12 versehen und damit auch zum Sack 10 zum unteren Teil des ersten Kreuzteils 2 und/oder des Kreuzteils 3. Das Befestigungsband 12 kann angepasst werden und als Halteband zum Transport des Podests 1 mit dem Sack 10 verwendet werden.

Der Sack 10, laut der Abbildung 3, beinhaltet im unteren Teil auf der Seitenwand 16 des Sacks 10 ein Feststellband 18, welches an der einen Längsseite mit dem Sack 10 und auf der anderen Längsseite im unteren Bereich im unteren Teil der Kreuzteils 2 und / oder des unteren Kreuzteils 3 verbunden ist. Die Verbindung kann als Klettverschluss oder Befestigungsband 18 mit genieteten Druckknöpfen, Häkchen oder ähnlicher Sicherungselemente ausgeführt werden.

Die weitere Ausführung des Sacks 10 (ohne Darstellung) beinhaltet kein Feststellband 12 mit Befestigungselement 17 wie im Anwendungsbeispiel in der Abbildung 2 noch das Fixierband 18 angezeigt in der Abbildung 3. Die Erzielung des Effekts, dass der Sack 10 bei einer Öffnung des Podests 1 den geöffneten Zustand beibehält wird durch die Einbringung von mindestens einem Versteifungsband mit Memoryeffekt im Sack 10 sichergestellt. Dieser hält die Form des Sacks im geöffneten Zustand. Das Versteifungsband kann am Sackboden 10 und / oder der Stirnwand des Sacks 10 und / oder an der hinteren Sackwand 10 angebracht werden.

In der Abbildung 4 ist das Podest 1 und auch der Sack 10 in zusammengelegtem Zustand abgebildet.

Die Abbildungen 5 bis 10 stellen die Beispiele der Ausführung des ersten Befestigungselements 8 und / oder des zweiten Befestigungselements 9 dar. Die einzelnen Ausführungen des ersten und zweiten Befestigungselements 8,9 können gleich oder unterschiedlich sein. Dieses ist ausschließlich von der Konstruktion des hinteren und vorderen Schlosseinlaufs 13, 14 abhängig.

Die Abbildung 5 stellt die Ausführung des Schlosseinlaufs 13, 14 dar, wo deren Ausführung am gesamten oberen Teil 6, 7 des Kreuzteils 2, 3 angepasst sind. In diesem Fall ist die Ausführung des Befestigungselements 8, 9 übereinstimmend mit dem oberen Teil 6, 7 des Kreuzteils 2, 3. Der Querschnitt des Profils der Befestigungselemente 8, 9 ist rund oder elliptisch.

Die Abbildung 6 stellt die Ausführung identisch der Abbildung 5 dar. Der Unterschied besteht in der Profilausführung. Der Querschnitt des Profils der Befestigungselemente 8, 9 ist quadratisch oder rechteckig. Weiter ist es möglich weitere verschiedene Profilquerschnitte zu verwenden zum Beispiel die Profile vom Typ T, I, H u.ä., , die jedoch für die Konstruktion des hinteren und vorderen Schlosseinlaufs 13, 14 angepasst und geeignet sein müssen.

Die Abbildung 7 stellt den Fall dar, wo die Ausführung der Befestigungselemente 8, 9 mittels einer Verengung 19 durchgeführt wurde, die dem hinteren und vorderen Schlosseinlauf 13, 14 angepasst ist.

Die Abbildung 8 stellt den Fall dar, wo die Ausführung der Befestigungselemente 8, 9 mittels einer Konsole 20 durchgeführt wurde, die dem hinteren und vorderen Schlosseinlauf 13, 14 angepasst ist.

Die Abbildung 9 stellt den Fall dar, wo die Ausführung der Befestigungselemente 8, 9 mittels eines Bolzens 21 und eines Flanschs 22, die dem hinteren und vorderen Schlosseinlauf 13, 14 angepasst sind.

Die Abbildung 10 stellt den Fall dar, wo die Ausführung der Befestigungselemente 8, 9 mittels eines Bolzens 23 und eines Flanschs 24, die dem hinteren und vorderen Schlosseinlauf 13, 14 angepasst sind.

Die eigentliche Sitzinstallation 5 auf das Podest 1 wird so durchgeführt, dass nach der Öffnung des Podests 1 in die Befestigungselemente 8, 9 des Podests 1 der Sitz 6 mittels der eigenen Schlosseinläufe 13, 14 eingeführt wird.

Die eigentliche Entnahme des Sacks 10 vom Podest 1 wird so durchgeführt, dass nach der Abnahme der Fixierbänder 11 und nach der Freigabe des Feststellbands 10 vom unteren Teil des ersten Kreuzteils 2 und / oder des zweiten Kreuzteils 3 oder nach der Freigabe des Befestigungsbands 18 vom unteren Kreuzteils 2 und / oder des zweiten Kreuzteils 3 wird der Sack 10 aus der Konstruktion des Podests 1 herausgezogen.

### Industrielle Nutzbarkeit

Das Podest mit Sack unter dem Sitz des Personenkraftwagens kann bei Automobilen mit der Ausstattung eines herausnehmbaren Sitzes aus dem Fahrzeug. Einen so demontierbaren Sitz, befestigt am Podest kann für verschiedene Erhoiungsaktivitäten verwendet werden. Zum Beispiel zum Angeln ohne das die Gefahr einer Verschmutzung oder Beschädigung des Sitzes besteht. Weiter zum Jagdsport, Camping, zur Erholung uns Entspannungszwecken im Garten bei der Laube, dem Wochenendhaus, dem Sitzen beim Lagerfeuer, beim Grillen, am Wasser u.ä.

Das eigentliche Podest mit Sack im geöffneten Zustand kann als Ablagebox oder Transportbox verwendet werden. Dieses Podest mit Sack kann in den Kofferraum des Automobils entweder im zusammengeklappten Zustand oder im geöffneten Zustand zum Transport verschiedener Gegenstände verwendet werden. Das Podest kann im Kofferraum auch gesichert werden.

Die Bestandteile des Sacks können auch Griffe oder Bänder zum Transport darstellen und der Sack kann auch als Tasche verwendet werden.

### Liste der Bezugskennzeichen

- 1 -: Podest für PKW-Sitze
- 2 -: Erstes Kreuzteil
- 3 -: Zweites Kreuzteil
- 4 -: Verbindungsgelenk des ersten und zweiten Kreuzteils
- 5 -: Automobilsitz
- 6 -: Erstes Oberteil des ersten Kreuzteils des Podests
- 7 -: Zweites Oberteil des zweiten Kreuzteils des Podests
- 8 -: Erstes Befestigungselement
- 9 -: Zweites Befestigungselement
- 10 -: Sack
- 11 -: Befestigungsband
- 12 -: Fixierband
- 13 -: Hinterer Sitzschlossanlauf
- 14 -: Vorderer Sitzschlossanlauf
- 15 -: Fixierglied
- 16 -: Sackseitenwand
- 17 -: Befestigungselement des Sackbandes
- 18 -: Befestigungsband
- 19 -: Verjüngung
- 20 -: Konsole
- 21 -: Bolzen
- 22 -: Flansch
- 23 -: Segment
- 24 -: Öffnung

## Patentansprüche

1. Das Podest (1) unter den Sitz (5) des Personenkraftwagens, bestehend aus einem ersten Kreuzteil (2) und einem zweiten Kreuzteil (3), verbunden mittels eines Gelenks (4) bilden so eine gekreuzte, kinematische Konstruktion mit dem Wesen bestehend darin, dass der erste obere Teil (6) des ersten Kreuzteils (2) des Podests (1) wenigstens ein erstes Befestigungselement (8) und der zweite obere Teil (7) des Kreuzteils (3) des Podests (1) wenigstens ein zweites Befestigungselement beinhaltet.

2. Das Podest (1) laut der Anforderung 1 mit dem Wesen bestehend dar in, dass das erste Befestigungselement (8) zur Befestigung in den hinteren Schlossanlauf (13) des Sitzes (5) und das zweite Befestigungselements (9) zur Befestigung in den vorderen Schlossanlauf (14) des Sitzes (5) ausgebildet ist.

3. Das Podest (1) laut der Anforderung 1 mit dem Wesen bestehend dari n, dass das erste Befestigungselement (6) des ersten Kreuzteils (2) zur Befestigung sich am ersten Befestigungselement (8) und an jedem Ende es oberen Teils (7) des zweiten Kreuzteils (3) das zweite Befestigungselement (9) befindet.

4. Das Podest (1) laut der Anforderung 1 mit dem Wesen bestehend dari n, dass im Innenbereich des Podests (1) sich der Sack (10) befindet, befestigt zum oberen Teil (6) des ersten Kreuzteils (2) und zum oberen Teil (7) des zweiten Kreuzteils (3) mittels mindestens eines Befestigungsbands (11).

5. Das Podest (1) laut der Anforderungen 1 und 4 mit dem Wesen bestehen d darin, dass das Befestigungsband (11) mit Klettverschluss gebildet wird.

6. Das Podest (1) laut der Anforderungen 1 und 4 mit dem Wesen bestehen d darin, dass das Befestigungsband (11) mit genieteten Druckknöpfen gebildet wird.

7. Das Podest (1) laut der Anforderungen 1 und 4 mit dem Wesen bestehen d darin, dass das Befestigungsband (10) aus abwaschbarem und wasserdichtem Material gefertigt ist.
